# EUROPÄISCHE PATENTSCHRIFT

(11) **EP 0 417 344 B1**
(45) Veröffentlichungstag und Bekanntmachung des Hinweises auf die Patenterteilung: **07.01.1993**
(21) Anmeldenummer: 89117054.0
(22) Anmeldetag: 14.09.1989
(51) Int. Cl.: F16H 57/02

(54) **Gehäuse mit in einer Gehäusewandöffnung randseitig wasserdicht gehaltenem Druckausgleichselement**
Housing with a pressure compensating element peripherically waterproof fixed in a housing wall opening
Boîte avec un élément de compensation de pression fixé périphériquement et étanche à l'eau dans une ouverture de paroi

(43) Veröffentlichungstag der Anmeldung: 20.03.1991
(73) Patentinhaber: SIEMENS AKTIENGESELLSCHAFT, 80333 München (DE)
(72) Erfinder: Knappe, Wolfram, Dipl.-Ing. (FH), D-8710 Kitzingen (DE); Michel, Peter, Dipl.-Ing. (FH), D-8702 Kleinrinderfeld (DE)

(56) Entgegenhaltungen:
- DD-A- 44 311
- DE-U- 7 040 982
- DE-U- 8 707 254

## Beschreibung

Die Erfindung bezieht sich auf ein Gehäuse mit in einer Gehäusewandöffnung randseitig wasserdicht gehaltenem Druckausgleichselement gemäß Oberbegriff des Anspruchs 1; ein derartiges Gehäuse ist aus der DE-U-8707 254 bekannt.

Im vorgenannten bekannten Fall ist ein Druckausgleichselement in Form einer handelsüblichen GORE-TEX ® PTFE-Membran in eine Gehäuseeinsenkung des Getriebegehäuses eines Kraftfahrzeug-Fensterhebers von außen bis zu einer Abstützschulter eingesteckt und in Gegenrichtung nach Zwischenlage eines Dichtringes durch eine gegengedrückte, in ihrer Endlage in der Gehäuseeinsenkung verkrallbare Federscheibe fixiert; dazu ist die Federscheibe tellerförmig mit durchbrochenem und in den Teller hineingewölbtem Tellerboden versehen.

Eine demgegenüber einfachere und sicherere wasserdichte Montage eines Druckausgleichselementes in einer Gehäusewandöffnung eines Gehäuses ist erfindungsgemäß durch die Lehre des Anspruchs 1 möglich; durch die erfindungsgemäße Konstruktion ist nur noch ein einziges, in einfacher Weise vormontierbares Kombinationsbauteil in die Gehäusewandungsöffnung einzuschieben, wobei nicht mehr die Gefahr einer Beschädigung der Membran bei deren Einzelmontage und Festlegung in der Gehäusewandsöffnung besteht und auf eine gesonderte Montage eines weiteren Bauelementes zur Abdichtung verzichtet werden kann.

Zur einfachen Vormontage der Membran in dem Sicherungsring ist dieser mit einer umlaufenden Anlageschulter versehen, an der der Außenrand der Membran bei der Vormontage wasserdicht, z.B. durch Kleben, Schweißen, Einspritzen, Verstemmen oder einer Kombination dieser Verfahren befestigbar ist.

Nach einer weiteren Ausgestaltung der Erfindung ist vorgesehen, den Sicherungsring zweiteilig auszubilden und die beiden Sicherungsringteile bei der Vormontage ineinanderzustecken, wobei zweckmäßigerweise die Membran zwischen Anlageschultern der beiden Sicherungsringteile gleichzeitig wasserdicht miteingeschlossen wird.

Zum Schutz der Membran gegen äußere Beschädigung bei der Montage oder im Betrieb ist der Sicherungsring bzw. sind die Sicherungsringteile an ihren äußeren Stirnseiten mit die Membranstirnfläche schützenden Schutzabdeckungen, insbesondere in Form von Schutzstreben, versehen, die bei zweckmäßiger Herstellung der Sicherungsringe als Kunststoff-Spritzteile ebenso wie die äußeren Dichtlippen einstückig mitangegossen sind.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
FIG 1 in einem axialen Teilschnittbild einen Fensterheber-Antrieb für ein Kraftfahrzeug mit im Getriebegehäuse angeordnetem Druckausgleichselement,
FIG 2 einen Teilschnitt gemäß Schnittverlauf II-II in FIG 1 mit einer ersten Ausführung eines Sicherungsringes,
FIG 3 einen Teilschnitt gemäß Schnittverlauf II-II in FIG 1 mit einer zweiten Ausführung eines Sicherungsringes,
FIG 4 eine stirnseitige Draufsicht auf die Gehäusewandöffnung mit eingesetzter Sicherungsscheibe gemäß FIG 2 bzw.3.

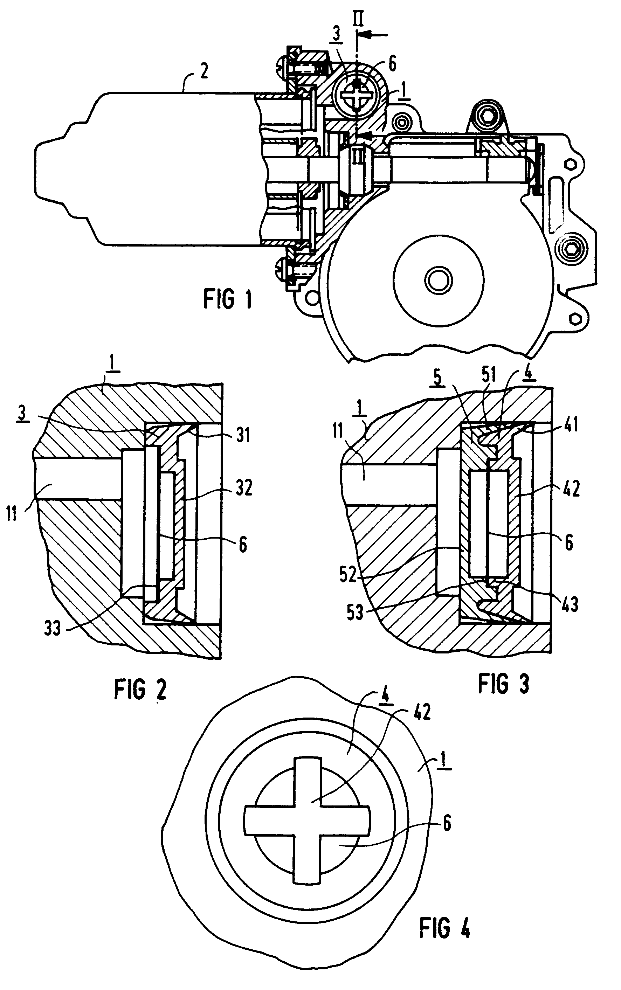

FIG 1 zeigt einen Fensterheber-Antrieb mit einem ein Schneckengetriebe aufnehmenden Getriebegehäuse 1 und einem daran angeschraubten Motorgehäuse 2 eines Kommutatormotors. Das Getriebegehäuse 1 weist eine Gehäusewandöffnung auf, die durch ein Druckausgleichselement 6 in Form einer PTFE-Membran derart verschlossen ist, daß ein Gasaustausch durch die Membran zwar stattfinden kann, jedoch von außen Wasser in das Getriebegehäuse nicht eindringen kann; zu diesem Zweck muß die Membran zusätzlich randseitig wasserdicht in der Gehäusewandöffnung gehalten sein.

FIG 2,3 zeigen im Schnitt gemäß Schnittverlauf II-II in FIG 1 zwei verschiedene Ausführungen eines erfindungsgemäßen, in die Gehäusewandöffnung des Getriebegehäuses 1 eingesetzten Sicherungsringes, wobei die Gehäusewandungsöffnung über eine Durchführungsöffnung 11 mit dem Inneren des Getriebegehäuses verbunden ist.

FIG 1 zeigt einen einteiligen Sicherungsring 3, auf dem auf einer Auflageschulter 33 eine PTFE-Membran 6 wasserdicht aufgeklebt ist. Der Sicherungsring 3 mit der vormontierten PTFE-Membran 6 wird vom rechten Ende her in die Gehäusewandöffnung bis zu deren Grund eingeschoben. Die Fixierung der Sicherungsscheibe 3 in dieser ihrer Endlage in axialer Gegenrichtung erfolgt durch eine umlaufende elastische Dichtlippe 31, die zweckmäßigerweise entgegen der Einsteckrichtung des Sicherungsringes 3 in die Gehäusewandöffnung schräggestellt ist und vor der Montage in der Gehäusewandöffnung einen gegenüber der lichten Weite der Gehäusewandöffnung größeren Außenranddurchmesser aufweist; auf diese Art und Weise kann einerseits automatisch eine Verkrallfixierung der Sicherungsscheibe 3 in ihrer Endlage und andererseits eine wasserdichte Halterung des Sicherungsringes 3 in der Gehäusewandöffnung gewährleistet werden.

FIG 3 zeigt eine zweiteilige, aus einem Sicherungsringteil 4 und einem Sicherungsringteil 5 zusammengesetzten Sicherungsring 4,5. Die Sicherungsringteile 4 bzw.5 weisen axial vorstehende Klemmstege bzw. korrespondierende Klemmnuten auf, derart daß beide Sicherungsringe 4 bzw.5 axial ineinandersteckbar sind. Ähnlich wie im Fall gemäß FIG 2 ist wiederum eine PTFE-Membran 6 auf einer Anlageschulter 43 bzw.53 des Sicherungsringes 4,5 zwischen den beiden Sicherungsringteilen wasserdicht festgelegt.

Zum äußeren mechanischen Schutz der PTFE-Membrane bei der Montage oder im späteren Betrieb ist nach einer Ausgestaltung der Erfindung vorgesehen, die Sicherungsringe 3 bzw.4,5 an ihren Stirnseiten mit die Stirnfläche der PTFE-Membran schützenden Schutzstreben 32 bzw.42 bzw.52 zu versehen, die - wie aus FIG 4 ersichtlich - z.B. kreuzförmig angeordnet sind. Zweckmäßigerweise bestehen die Sicherungsringe aus Kunststoff-Spritzteilen mit einstückig angegossenen Dichtlippen und gegebenenfalls auch Schutzstreben.

## Patentansprüche

1. Gehäuse mit in einer Gehäusewandöffnung randseitig wasserdicht gehaltenem Druckausgleichselement (3,6;4,5,6) in Form einer mittels eines Sicherungselementes (4,5) fixierten, gasdurchlässigen, jedoch das Eindringen von Wasser in das Gehäuse (1) verhindernden Membran (6), das in die Gehäuseöffnung eingesteckt ist und in seiner Endlage gegen eine Anlageschulter der Gehäuseöffnung durch das in der Gehäuseöffnung verkrallte Sicherungselement wasserdicht fixiert ist, **dadurch gekennzeichnet**, daß das Sicherungselement ein Sicherungsring (3;4;5) ist, der als Halter für die an diesem vormontierte Membran (6) ausgebildet und randseitig mit zumindest einer umlaufenden Dichtlippe (31) versehen ist, durch welche der Sicherungsring mit der vormontierten Membran nach dem Einstecken in die Gehäusewandöffnung in dieser wasserdicht verkrallt ist.

2. Gehäuse nach Anspruch 1, **dadurch gekennzeichnet,** daß die Membran (6) an einer gehäuseseitig umlaufenden Anlageschulter (33) des Sicherungsringes (3) abgedichtet vormontiert ist.

3. Gehäuse nach Anspruch 1, **dadurch gekennzeichnet**, daß der Sicherungsring (4,5) axial zweiteilig zuzammengesetzt und axial zwischen den beiden Sicherungsringteilen (4 bzw.5) die Membran (6) abgedichtet gehalten ist.

4. Gehäuse nach Anspruch 3, **dadurch gekennzeichnet,** daß jeder der beiden axial unter Einschluß der Membran (6) zusammengesetzten Sicherungsringteile (4 bzw.5) mit zumindest einer randseitig umlaufenden Dichtlippe (41 bzw.51) versehen ist.

5. Gehäuse nach Anspruch 1 oder 4, **dadurch gekennzeichnet**, daß der Außendurchmesser (Dichtlippenrand) des unmontierten Sicherungsringes (3 bzw.4;5) größer ist als der innere Durchmesser der den verkrallbaren Sicherungsring aufnehmenden Gehäuseöffnung.

6. Gehäuse nach Anspruch 1 oder 4, **dadurch gekennzeichnet**, daß die Dichtlippen (31 bzw.41;51) der unmontierten Sicherungsringe (3 bzw.4;5) entgegen ihrer Einsteckrichtung in die Gehäuseöffnung schräggestellt sind.

7. Gehäuse nach Anspruch 1 bzw.3, **dadurch gekennzeichnet**, daß der Sicherungsring (3 bzw.4;5) zumindest an der der Gehäuseöffnung zugewandten Stirnseite mit die Membranstirnfläche schützenden Schutzabdeckungen, insbesondere Schutzstreben (32 bzw.42 bzw.52), versehen ist.

8. Gehäuse nach Anspruch 3 oder 4, **dadurch gekennzeichnet**, daß die beiden Sicherungsringteile (4 bzw.5) axial ineinandersteckbar sind.

9. Gehäuse nach Anspruch 1 bis 8, **dadurch gekennzeichnet**, daß der Sicherungsring (3) bzw. jedes Sicherungsringteil (4 bzw.5) mit den Dichtlippen (31 bzw. 41 bzw.51) und gegebenenfalls den Schutzabdeckungen (32 bzw.42 bzw.52) als einstückiges Kunststoffteil ausgebildet ist.

10. Gehäuse nach zumindest einem der Ansprüche 1 bis 9, **dadurch gekennzeichnet**, daß eine PTFE-Membran vorgesehen ist.

## Claims

1. Housing with pressure-compensating element (3, 6; 4, 5, 6) held in a water-tight manner on the edge of a housing wall opening in the form of a membrane (6) which is fixed by means of a securing element (4, 5), is permeable to gas, yet which prevents the penetration of water into the housing (1), which element is inserted into the housing opening and is fixed in a water-tight manner in its final position against a contact shoulder of the housing opening by means of the securing element which is held fast in the housing opening, characterised in that the securing element is a securing ring (3; 4; 5) which is formed as a holder for the membrane (6) preassembled thereon and is provided on the edge with at least one circumferential sealing lip (31) by means of which the securing ring with the preassembled membrane after insertion into the housing wall opening is held fast in the latter in a water-tight manner.

2. Housing according to claim 1, characterised in that the membrane (6) is preassembled in a sealed manner on a contact shoulder (33) of the securing ring (3) which shoulder is circumferential on the housing side.

3. Housing according to claim 1, characterised in that the securing ring (4, 5) is composed axially of two portions and the membrane (6) is held in a sealed manner axially between the two securing ring portions (4 and 5).

4. Housing according to claim 3, characterised in that each of the two securing ring portions (4 and 5) composed axially with inclusion of the membrane (6) is provided with at least one sealing lip (41 and 51 respectively) which runs round on the edge side.

5. Housing according to claim 1 or 4, characterised in that the outside diameter (sealing lip edge) of the unassembled securing ring (3 and 4; 5 respectively) is greater than the inside diameter of the housing opening which receives the securing ring which can be held fast.

6. Housing according to claim 1 or 4, characterised in that the sealing lips (31 and 41; 51 respectively) of the unassembled securing rings (3 and 4;5 respectively) are inclined with respect to their direction of insertion into the housing opening.

7. Housing according to claim 1 and 3 respectively, characterised in that the securing ring (3 and 4; 5 respectively), at least on the side facing the housing opening, is provided with protective coverings protecting the membrane end face, in particular protective struts (32 and 42 and 52 respectively).

8. Housing according to claim 3 or 4, characterised in that the two securing ring portions (4 and 5) can be inserted into each other axially.

9. Housing according to claim 1 to 8, characterised in that the securing ring (3) or each securing ring portion (4 and 5), with the sealing lips (31 and 41 and 51 respectively) and, if applicable, the protective coverings (32 and 42 and 52 respectively), is formed as a one-piece plastics portion.

10. Housing according to at least one of the claims 1 to 9, characterised in that a PTFE membrane is provided.

## Revendications

1. Boîtier comprenant un élément de compensation de pression (3, 6 ; 4, 5, 6) maintenu de manière étanche à l'eau par le bord dans une ouverture du boîtier et sous forme d'une membrane (6) immobilisée au moyen d'un élément de blocage (4, 5), perméable au gaz, mais empêchant l'eau de pénétrer dans le boîtier (1), qui est insérée dans l'ouverture du boîtier et qui est immobilisée de manière étanche à l'eau en sa position finale, sur un épaulement de butée de l'ouverture du bottier, par l'élément de blocage retenu dans l'ouverture du boîtier, caractérisé en ce que l'élément de blocage est un anneau de blocage (3, 4, 5) qui est constitué en support pour la membrane (6) prémontée sur celui-ci et qui est muni, sur le bord, d'au moins une lèvre d'étanchéité (31) qui fait tout le tour et par laquelle l'anneau de blocage avec la membrane prémontée, est retenu, après l'insertion dans l'ouverture de la paroi du boîtier, dans celle-ci de manière étanche à l'eau.

2. Boîtier suivant la revendication 1, caractérisé en ce que la membrane (6) est prémontée de manière étanche sur un épaulement d'appui (33) de l'anneau de blocage (3) qui fait tout le tour, du côté du boîtier.

3. Boîtier suivant la revendication 1, caractérisé en ce que l'anneau de blocage (4, 5) est composé axialement de deux parties et la membrane (6) est maintenue étanche axialement entre les deux parties de l'anneau de blocage (4 et 5).

4. Boîtier suivant la revendication 3, caractérisé en ce que chacune des deux parties de l'anneau de blocage (4 et 5) assemblées axialement en incluant la membrane (6), est munie d'au moins une lèvre d'étanchéité (41 et 51) faisant tout le tour, du côté du bord.

5. Boîtier suivant la revendication 1 ou 4, caractérisé en ce que le diamètre extérieur (bord de la lèvre d'étanchéité) de l'anneau de blocage (3 et 4 ; 5) non monté est supérieur au diamètre intérieur de l'ouverture du boîtier recevant l'anneau de blocage qui peut être retenu.

6. Boîtier suivant la revendication 1 ou 4, caractérisé en ce que les lèvres d'étanchéité (31 et 41 ; 51) des anneaux de blocage (3 et 4 ; 5) non montés sont inclinées par rapport à leur direction d'insertion dans l'ouverture du boîtier.

7. Boîtier suivant la revendication 1 ou 3, caractérisé en ce que l'anneau de blocage (3 et 4 ; 5) est muni, au moins du côté frontal tourné vers l'ouverture du boîtier, de pièces de recouvrement destinées à protéger la surface frontale de la membrane, notamment de barreaux de protection (32 et 42 et 52).

8. Boîtier suivant la revendication 3 ou 4, caractérisé en ce que les deux parties de l'anneau de blocage (4 et 5) peuvent être enfilées axialement l'une dans l'autre.

9. Boîtier suivant l'une des revendications 1 à 8, caractérisé en ce que l'anneau de blocage () ou chaque partie de l'anneau de blocage (4 et 5) forme une pièce en matière plastique d'un seul tenant avec les lèvres d'étanchéité (31 et 41 et 51), et, le cas échéant, avec les pièces de recouvrement et de protection (32 et 42 et 52).

10. Boîtier suivant l'une au moins des revendications 1 à 9, caractérisé en ce qu'il est prévu une membrane en PTFE.
